# EUROPEAN PATENT SPECIFICATION

(11) **EP 1 521 087 B1**
(45) Date of publication and mention of the grant of the patent: **28.05.2008**
(21) Application number: 04023211.8
(22) Date of filing: 29.09.2004
(51) Int. Cl.: G01P 21/00, G11B 19/04, G11B 21/12

(54) **Fall detection method and system**
Sturzerfassungsverfahren und -system
Méthode et système de détection de chute

(30) Priority: 03.10.2003 JP 2003345595
(43) Date of publication of application: 06.04.2005
(73) Proprietor: Sony Corporation, Tokyo (JP)
(72) Inventor: Katai, Ryoichi, Shinagawa-ku, Tokyo (JP); Yoshida, Hiroshi, Shinagawa-ku, Tokyo (JP); Ogata, Masanori, Shinagawa-ku, Tokyo (JP)
(74) Representative: Melzer, Wolfgang

(56) References cited:
- EP-A- 0 658 894
- US-A- 6 018 431

## Description

### 1. FIELD OF THE INVENTION

The present invention relates to a method and system for fall detection utilizing an output of an acceleration sensor compensated for any variation of a power supply voltage.

### 2. DESCRIPTION OF THE RELATED ART

Conventionally, an acceleration sensor has been popularly used for impact and fall detection. The output of such an acceleration sensor shows a change in proportion to its power supply voltage. Patent Document 1 (JP-A-8-45169) shows a vibration-resistant unit and method for optical disk drives utilizing such an acceleration sensor. Specifically, utilized is the output of an acceleration sensor to appropriately adjust the control operation to be executed by a servo controller, - thereby improving the vibration resistance capability of the optical disk drives.

The issue here is that using the acceleration sensor to such a conventional vibration-resistant unit and method for optical disk drives results in the following drawbacks. That is, an output signal from an acceleration sensor shows a change if any variation occurs to the power supply voltage of the acceleration sensor. As a result, if the acceleration sensor is used for a portable disk drive with a battery power source, any decrease of the power supply voltage exerts an influence upon the output signal of the acceleration sensor, preventing proper acceleration detection. More in detail, once the remaining energy in the battery power source is reduced, the battery terminal voltage is also decreased at the instant of a load current, resulting in decrease of the power supply voltage.

If the output signal of the acceleration sensor is influenced as such by the decreased power supply voltage, the output value coming from the acceleration sensor becomes not reliable enough for the vibration-resistant unit and method for optical disk drives of Patent Document 1, the vibration resistance capability of which is relying on the output from the acceleration sensor. This resultantly prevents the servo controller from appropriately adjusting its control operation, failing in canceling the influence to be exerted upon the tracking control and pickup feeding operation with any impact on the optical disk drives. Such cancellation failure problematically breaks the optical disks and disk drives therefor.

There may be a possibility for the circuit structure not causing the power supply voltage of an acceleration sensor to vary. Such a circuit structure, however, is difficult to be put into practical use, and even if realized, the cost will be high and thus it does not serve the purpose well.

A fall detection method in which all features of the precharacterizing part of claim 1 are disclosed, is described in EP-A-0 658 894.

Further, there is known from US-A-6 018 431 a disk drive system comprising a shock evaluator, in which the communication between the read/write transducer and the disk is interrupted to prevent corruption of data stored on the disk when the shock evaluator determines that a physical shock is present.

### SUMMARY OF THE INVENTION

It is an object of the present invention to provide a fall detection method and system with which fall detection can be correctly done through acceleration detection made properly despite any decrease observed for the power supply voltage of an acceleration sensor without causing cost increase.

Another object of the present invention is to provide a recording and/or reproduction system with which fall detection can be correctly done through acceleration detection made properly despite any decrease observed for the power supply voltage of an acceleration sensor without causing cost increase, and in which a recording medium and a disk drive therefore are not broken even if they fall.

These objects are achieved by a fall detection method, a fall detection system and a recording and/or reproduction system according to the enclosed independent claims. Advantageous features of the present invention are defined in the corresponding subclaims.

According to the present invention, even if the acceleration sensor is decreased in its power supply voltage, the sensor output is compensated considering the voltage decrease, and thus compensated sensor output is used as a factor for fall determination. Thus, this enables proper acceleration detection without causing cost increase, leading to fall detection with accuracy.

### BRIEF DESCRIPTION OF THE DRAWINGS

FIG. 1 is a block diagram showing the structure of a fall detection system to which a fall detection method of a first embodiment is applied;
FIG. 2 is a decision diagram derived by plotting, on a time axis, the voltage level of a voltage output Vout of an acceleration sensor in the fall detection system of the first embodiment;
FIG. 3 is a block diagram showing the structure of a recording and reproduction system of a second embodiment;
FIG. 4 is a block diagram showing the structure of firmware 75 in the recording and reproduction system of the second embodiment; and
FIG. 5 is a flowchart showing a fall detection process in a fall detection system incorporated in the recording and reproduction system of the second embodiment.

### DESCRIPTION OF THE PREFERRED EMBODIMENTS

The object of providing a method for correct fall detection, without causing cost increase, through acceleration detection made properly despite any decrease observed for the power supply voltage of an acceleration sensor is successfully achieved by a fall determination to be made as below. That is, when an acceleration sensor changes in its power supply voltage, the sensor output is compensated based on the change ratio between the power supply voltage and a reference power supply voltage, and making a fall determination by referring to any change observed on a time axis for thus compensated sensor output.

Another object of providing a system for correct fall detection, without causing cost increase, through acceleration detection made properly despite any decrease observed for the power supply voltage of an acceleration sensor is favorably achieved by including an acceleration sensor and control means. More in detail, the acceleration sensor is provided for detecting the acceleration, and when the acceleration sensor changes in its power supply voltage, the control means compensates the sensor output based on the change ratio between the power supply voltage and a reference power supply voltage, and makes a fall determination based on the compensated sensor output.

Still another object of providing a recording and reproduction system capable of preventing breakdown due to fall with correct fall detection, without causing cost increase, through acceleration detection made properly despite any decrease observed for the power supply voltage of an acceleration sensor is favorably achieved by including an acceleration sensor and control means. More in detail, the acceleration sensor is provided for detecting the acceleration, and when the acceleration sensor changes in its power supply voltage, the control means compensates the sensor output based on the change ratio between the power supply voltage and a reference power supply voltage, and makes a fall determination based on the compensated sensor output. When determined as a fall is occurring, the control means executes a retracting operation of a head for data recording or reproduction with respect to recording media.

### [First Embodiment]

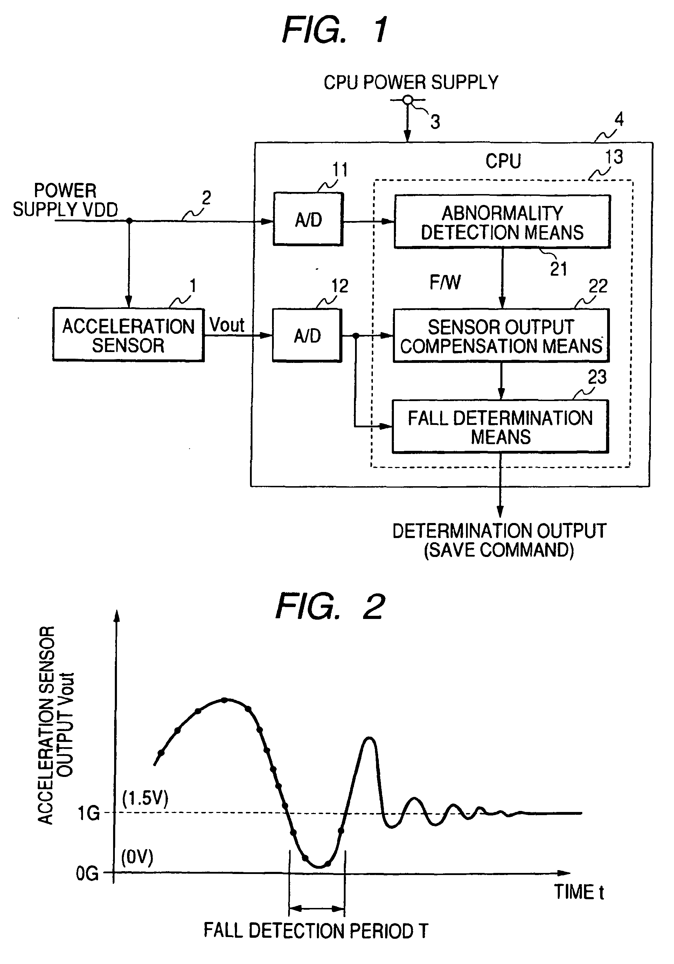

FIG. 1 is a block diagram showing the structure of a fall detection system to which a fall detection method of a first embodiment is applied.

This fall detection system is provided with an acceleration sensor 1, a power supply line 2, a CPU power supply line 3, and a CPU (control means) 4. The power supply line 2 is provided to supply a power supply voltage VDD to the acceleration sensor 1, and the CPU power supply line 3 is of a channel different from the power supply line 2.

The CPU 4 is connected to the CPU power supply line 3 which is a different channel from the power supply line 2 and receives power thereover. The CPU 4 is provided with A/D converters 11 and 12, and firmware (control means) 13. The firmware 13 is structured by abnormality detection means (control means) 21, sensor output compensation means (control means) 22, and fall determination means (control means) 23.

Such a fall detection system is incorporated in a disk storage exemplified by a hard disk drive, and the acceleration sensor 1 is provided for fall detection of such a disk storage. More in detail, detected by the acceleration sensor 1 are the acceleration gravity, and the amount of change thereof, and the detection result is output as a voltage signal Vout.

The acceleration sensor 1 is structured by a G sensor, and an amplification circuit for amplifying the sensor output, i.e., voltage signal Vout. Once the power supply voltage of the acceleration sensor 1 changes, the voltage signal Vout also changes in voltage level in proportion thereto.

The power supply voltage VDD of the acceleration sensor 1 is provided over the power supply line 2.

The power supply line 2 is connected to the output end of a regulator that is not shown.

The input end of the regulator is connected to a battery to stabilize the output voltage of the battery, and forwards the power supply voltage VDD of the acceleration sensor 1 to the power supply line 2. Accordingly, the power supply capacity of the power supply line 2 is determined by the capacity of the battery.

The CPU power supply line 3 is of a channel different from the power supply line 2, providing power to the CPU 4.

The A/D converter 11 in the CPU 4 converts, to digital data, the voltage level of the power supply voltage VDD provided to the acceleration sensor 1 over the power supply line 2.

The A/D converter 12 converts, to digital data, the detection result of the acceleration gravity, i.e., voltage signal Vout, coming from the acceleration sensor 1.

The abnormality detection means 21 in the firmware 13 performs monitoring of the power supply voltage VDD provided as digital data over the power supply line 2 from the A/D converter 11. This monitoring is performed by interruptions or polling at established intervals, thereby detecting any abnormality of the power supply voltage of the power supply line 2, whether it is decreasing or not. For such an abnormality detection, the power supply voltage VDD of the power supply line 2 is used as a reference power supply voltage. If the voltage value of the power supply line 2 indicated by the digital data provided by the A/D converter 11 is lower than the reference power supply voltage VDD, it is determined as being abnormal. Once such an abnormality of voltage decrease is detected, information about the voltage difference from the reference power supply voltage VDD is forwarded to the sensor output compensation means 22.

Based on the voltage difference, the sensor output compensation means 22 compensates the voltage signal Vout provided by the acceleration sensor 1.

Such compensation is applied in the following manner, for example. The acceleration sensor 1 shows specific characteristics relative to its output, i.e., any value variation occurring to the power supply voltage responsively changes the sensor output. Such characteristics are explicitly defined by manufacturers in advance for each acceleration sensor type. Generally, the voltage signal Vout provide by the acceleration sensor 1 varies in voltage level in proportion to the power supply voltage.

In this case, assuming that the acceleration sensor 1 in use has a reference power supply voltage VDD of 3V. Also presumably, the power supply line 2 has the voltage of 3V, the acceleration gravity detected by the acceleration sensor 1 is 1G, and the acceleration sensor 1 outputs the voltage signal Vout having the voltage level of 1.5V.

With such presumptions, considered here is a case where the power supply line 2 is reduced in voltage to 2V. Here, the variation of the power supply voltage for the acceleration sensor 1 shows specific characteristics relative to the voltage signal Vout coming from the acceleration sensor 1 is explicitly defined by manufacturers in advance for each acceleration sensor type. Accordingly, such characteristics tells the voltage level of the voltage output Vout of the acceleration sensor 1 at the time when the power supply line 2 is reduced in voltage to 2V. That is, the voltage 2V of the power supply line 2 after decrease is two-thirds of the initial voltage of 3V. Accordingly, the voltage level of the voltage output Vout of the acceleration sensor 1 is also decreased to two thirds of 1.5V, i.e., 1V.

For the acceleration sensor 1, its voltage output Vout showing the voltage level of 1V is obviously abnormal and indicates a fall when the power supply line 2 is providing the initial voltage of 3V. However, as presumed, the voltage of the power supply line 2 is decreasing to 2V. In consideration of such voltage decrease, the sensor output compensation means 22 accordingly performs compensation for the voltage output Vout of the acceleration sensor 1, i.e., voltage level of 1V. At the time of such compensation, used is a compensation value corresponding to the voltage decrease from the initial voltage of 3V.

To be more specific, the voltage decrease from the power supply voltage VDD of 3V is 1V, i.e., one-thirds of the initial voltage of 3V. Based thereon, the compensation value will be 0.5V, equal to one-thirds of the voltage level of 1.5V for the voltage output Vout. For voltage compensation, the compensation value 0 . 5V will be added to 1V, which is the voltage level of the voltage output Vout when the power supply line 2 is decreased in voltage to 2V.

As shown in FIG. 2, the fall detection means 23 plots, on a time axis, the voltage output Vout of the acceleration sensor 1 as a result of compensation performed by the sensor output compensation means 22. Based on any change observed for the voltage output Vout on the time axis, a fall determination is made in the following manner.

For a disk storage exemplified by a hard disk drive including such a fall detection system to enter a state referred to as fall state, it is first brought upward and then fallen freely. As shown in FIG. 2, the voltage output Vout of the acceleration sensor 1 will vary up and down with respect to the voltage output of 1.5V when 1G of the acceleration gravity is acting upon the acceleration sensor 1, and once the disk storage fell, the 1G of the acceleration gravity is stabilized while acting upon the acceleration sensor 1. FIG. 2 is a fall decision diagram derived by plotting, on a time axis, the voltage level of the voltage output Vout of the acceleration sensor 1, and therein, a period T denotes a fall detection period.

The fall determinationmeans 23 makes a fall determination at the earlier possible moment in the fall detection period T.

Once the fall determination means 23 made such a fall determination, the determination result is used as a cue for a retracting operation for the magnetic head of the hard disk drive, for example.

As described above, according to the first embodiment, even if the acceleration sensor 1 is decreased in its power supply voltage, the voltage output Vout of the acceleration sensor 1 is compensated considering the voltage decrease for use for a fall determination. This favorably achieves correct acceleration detection with no cost increase, effectively leading to a method and system for correct fall detection.

What is more, the firmware 13 is structured by the abnormality detection means 21, the sensor output compensation means 22, and the fall determination means 23. Such a structure successfully simplifies the circuit design, effectively leading to a method and system for fall detection causing no cost increase.

Further, it is possible to ease the constraints on the acceleration sensor 1, specifically on the variation or range of the power supply voltage, and thus this effectively leads to a method and system for fall detection allowing the extended selection range of the acceleration sensor 1 for use.

Still further, the monitoring cycle for the power supply voltage of the acceleration sensor 1 can be flexibly set. Accordingly, this effectively leads to a method and system for fall detection with which the power supply voltage of the acceleration sensor 1 can be determined whether abnormal or not with accuracy and reliability, those of which are flexibly set to be of any required level.

Still further, using a table for a compensation process to be executed by the sensor output compensation means 22 can shorten the time taken therefor. Accordingly, this effectively leads to a method and system for performing fall detection in almost real time.

### [Second Embodiment]

Described in a second embodiment is a recording and reproduction system incorporating therein the fall detection system of the first embodiment.

The recording and reproduction system herein is of a portable type that is used for recording various kinds of information to a hard disk, and reproducing the recorded information from the hard disk.

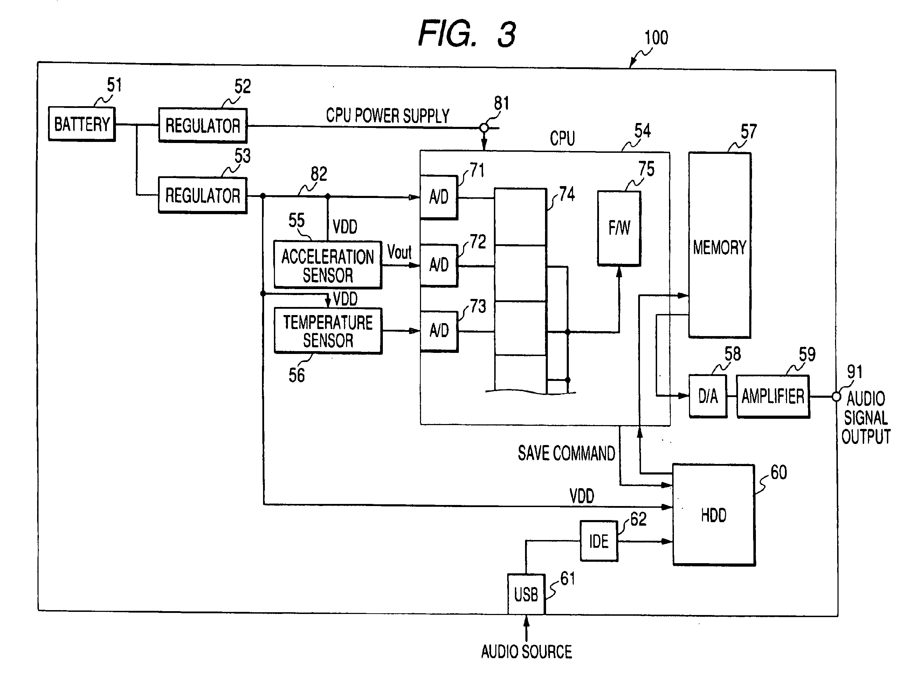

FIG. 3 is a block diagram showing the structure of a recording and reproduction system 100, including a battery 51 serving as a power source, regulators 52 and 53, a CPU power supply line 81, a power supply line 82, a CPU (control means, retracting operation control means) 54, an acceleration sensor 55, a temperature sensor 56, memory 57, a D/A converter 58 for audio signal reproduction, an amplification circuit 59, an audio signal output terminal 91, a hard disk drive 60, an USB terminal 61, an IDE (Integrated Drive Electronics) 62, and others.

The battery 51 is a rechargeable NiCd battery, or a disposable manganese, alkaline, or lithium battery, and has a limitation of supply capability of a voltage and a current.

The regulator 52 stabilizes the output voltage of the battery 51, and is in charge of power supply to the CPU power supply line 81.

The regulator 53 stabilizes the output voltage of the battery 51, and is in charge of power supply to the power supply line 82.

The CPU power supply line 81 is provided for power supply to the CPU 54, and the power supply line 82 is for power supply to the acceleration sensor 55, the temperature sensor 56, and the hard disk drive 60.

The CPU 54 includes A/D converters 71, 72, and 73, a register 74, firmware (control means, retracting operation control means) 75, an input/output port, various interfaces, and others.

The A/D converter 71 converts, into digital data, the voltage level of the power coming over the power supply line 82, and then transfers the conversion result to a predetermined region of the register 74.

The A/D converter 72 converts, into digital data, the output voltage Vout of the acceleration sensor 55, and then transfers the conversion result to a predetermined region of the register 74.

The A/D converter 73 converts, into digital data, the output of the temperature sensor 56 for transfer to a predetermined region of the register 74.

The register 74 is accessible by the CPU 54 that executes the firmware 75, whereby reading is done from the respective regions for the voltage level of the power supply line 82, the output voltage Vout of the acceleration sensor 55, and the output of the temperature sensor 56.

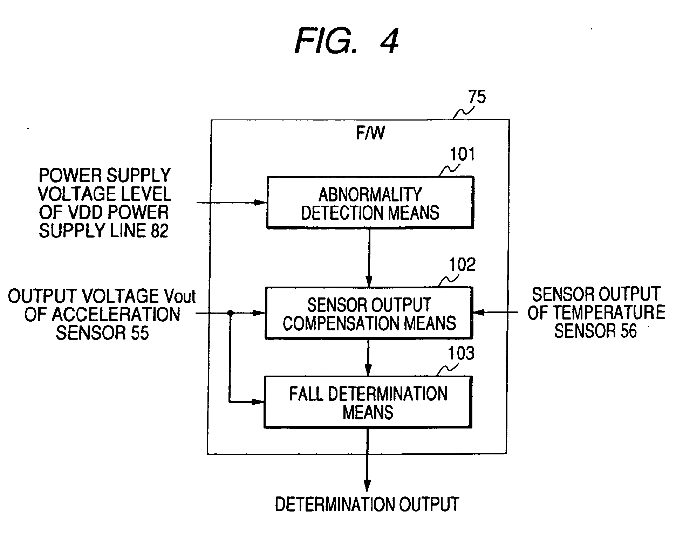

FIG. 4 is a block diagram showing the structure of the firmware 75, including abnormality detection means (control means) 101, sensor output compensation means (control means) 102, and fall determination means (control means, retracting operation control means) 103.

The abnormality detection means 101 performs monitoring of the power supply voltage provided as digital data over the power supply line 82 from the A/D converter 71. This monitoring is performed by interruptions or polling at established intervals, thereby detecting any abnormality of the voltage of the power supply line 82, whether it is decreasing or not.

Such an abnormality detection by the abnormality detection means 101 uses a reference power supply voltage, with which the acceleration sensor 55, the temperature sensor 56, and the hard disk drive 60 all function properly. If the voltage value of the power supply line 82 indicated by the digital data provided by the A/D converter 71 is lower than the reference power supply voltage, it is determined as being abnormal. Once such an abnormality of voltage decrease is detected, information about the voltage difference from the reference power supply voltage is forwarded to the sensor output compensation means 102.

Based on the voltage difference, the sensor output compensation means 102 compensates the voltage signal Vout provided by the acceleration sensor 55. Such compensation is similar to the first embodiment, and thus is not described again. The sensor output compensation means 102 also performs compensation based on the ambient temperature of the acceleration sensor 55 detected by the temperature sensor 56 in the following manner.

The voltage output Vout of the acceleration sensor 55 varies depending on the ambient temperature. The acceleration sensor 55 shows specific temperature characteristics relative to its voltage output Vout, and such characteristics are often explicitly defined by manufacturers in advance for each acceleration sensor type. If not explicitly defined, the temperature characteristics data may be empirically collected, and compensation data may be compiled in a table for the temperature characteristics of the acceleration sensor in the fall detection system. Thus compiled table is stored in memory. Thereafter, based on the ambient temperature of the acceleration sensor 55 detected by the temperature sensor 56, any corresponding compensation data is read from the table, and the voltage output Vout of the acceleration sensor 55 is compensated using the compensation data.

The fall determination means 103 plots, on a time axis, the voltage level of the voltage output Vout of the acceleration sensor 55 as a result of compensation performed by the sensor output compensation means 102 as shown in FIG. 2. Based on the resulting plot, a fall determination is made in the similar manner to the first embodiment.

When the fall determination means 103 determines a fall, the CPU 54 accordingly issues a retracting command to the hard disk drive 60 for retracting its magnetic head. In this manner, the magnetic head is retracted, and the hard disk or others are protected from breaking down due to the fall.

The acceleration sensor 55 is provided for fall detection of a disk drive exemplified by a hard disk drive. The acceleration sensor 55 detects the acceleration gravity for the disk drive and the amount of change thereof, and the detection result is output as a voltage signal Vout. The acceleration sensor 55 is structured by a G sensor, and an amplification circuit for amplifying the sensor output. Once the power supply voltage of the acceleration sensor 55 changes, the sensor output also changes in voltage level in proportion thereto. The power supply voltage VDD of the acceleration sensor 55 comes over the power supply line 82.

The temperature sensor 56 detects the ambient temperature of the acceleration sensor 55 for compensating the voltage change observed for the voltage output Vout of the acceleration sensor 55 after any temperature change occurs, e.g., temperature increase.

The memory 57 temporarily stores music data read from the hard disk drive 60.

The D/A converter 58 for audio signal reproduction converts the music data in the memory 57 to an analog signal.

The amplification circuit 59 amplifies the analog signal coming from the D/A converter 58 for audio signal reproduction.

An audio signal output terminal 91 outputs, to the outside, the analog signal amplified in the amplification circuit 59 as an audio signal.

The hard disk drive 60 performs data writing and reading to/from the hard disk responding to various commands issued by the CPU 54. The various commands include a retracting command for the retracting operation of the magnetic head to prevent the hard disk drive 60 from breaking down even if it falls.

The USB terminal 61 is used to capture audio source data. The IDE 62 is an interface for direct connection of the hard disk.

Described next is the operation.

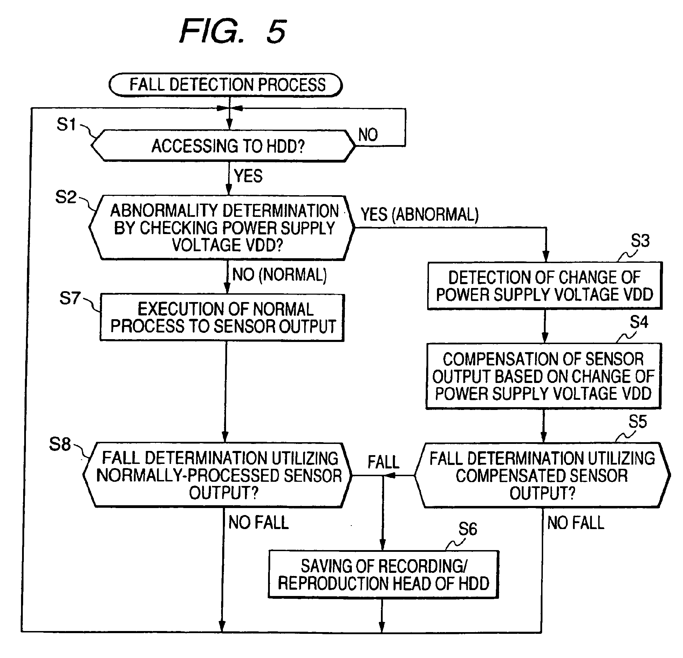

FIG. 5 is a flowchart showing a fall detection process to be executed by the fall detection system incorporated in the recording and reproduction system of the present invention.

The fall detection process is realized by the CPU 4 executing the firmware 13. When the hard disk drive 60 suffers impact due to fall, the drive mechanism of the magnetic head and the hard disk itself are broken. Thus, when a fall occurs, a retracting operation is instantly executed to retract the magnetic head from the hard disk before the head suffers impact. This thus requires to correctly detect fall occurrence. If the fall detection result is not reliable enough, the retracting operation may be erroneously executed to the magnetic head at frequent intervals, or the retracting operation may not be promptly executed even if a fall actually occurs.

The fall detection process using the fall detection system of the present invention can achieve fall detection with high reliability. In the process, a determination is first made whether the hard disk drive 60 is accessing a hard disk (step S1). The reason for such a determination is that, if the hard disk drive 60 is accessing the hard disk, a relatively large amount of current will be required in the drive mechanism of the magnetic head. Accordingly, in a case where the battery 51 has not that much energy left, every access to the hard disk will reduce the output voltage of the battery 51, thereby decreasing the voltage of the power supply line 82.

If Yes in step 1, based on the monitoring result derived by the abnormality detection means 101 for the power supply voltage VDD of the power supply line 82, an abnormality determination is made for the voltage of the power supply line 82 (step S2). If determined as the voltage being abnormal, the voltage decrease is detected for output as information to the sensor output compensation means 102 (step S3).

Based on the voltage difference, the sensor output compensation means 102 then compensates the voltage signal Vout provided by the acceleration sensor 55 (step S4).

The voltage signal Vout is also compensated based on the ambient temperature of the acceleration sensor 55 detected by the temperature sensor 56.

Based on thus compensated voltage signal Vout, the fall determination means 103 then makes a fall determination (Step S5).

In step S5, if the voltage of the power supply line 82 is showing abnormality even if the voltage signal Vout provided by the acceleration sensor 55 is rapidly reduced, the voltage signal Vout will be accordingly compensated so that no fall is determined as occurring.

In such a manner, no fall is determined as occurring even if the power supply line 82 is reduced in voltage due to rapid load variation, whereby a retracting operation or others are not executed to the magnetic head.

On the other hand, if Yes in step S5, a command to retract the magnetic head is issued to the hard disk drive 60. In response, the magnetic head is retracted before fall impact breaks the drive mechanism of the magnetic head or the hard disk itself so that the hard disk drive 60 suffers no harm (step S6).

Note here that, in step S2, if the voltage of the power supply line 82 is determined as being normal, the output voltage Vout of the acceleration sensor 55 is processed in a normal manner with no compensation performed (step S7). Based on thus normally-processed output voltage Vout of the acceleration sensor 55, the fall determination means 103 then makes a fall determination (step S8).

As described in the foregoing, according to the second embodiment, even if the acceleration sensor 55 is decreased in its power supply voltage, the voltage output Vout of the acceleration sensor 55 is compensated considering the voltage decrease for use for a fall determination. This favorably achieves correct acceleration detection with no cost increase, effectively leading correct fall detection. Once a fall is detected, the magnetic head is retracted before fall impact breaks the drive mechanism of the magnetic head or the hard disk itself, effectively leading to a recording and reproduction system capable of protecting the hard disk drive 60 from suffering harm.

What is more, the firmware 75 is structured by the abnormality detection means 101, the sensor output compensation means 102, and the fall determination means 103. Such a structure successfully simplifies the circuit design, effectively leading to a recording and reproduction system causing no cost increase.

Further, it is possible to ease the constraints on the acceleration sensor 55, specifically on the variation or range of the power supply voltage, and thus this effectively leads to a recording and reproduction system for fall detection allowing the extended selection range of the acceleration sensor 55 for use.

Still further, the monitoring cycle for the power supply voltage of the acceleration sensor 55 can be flexibly set. Accordingly, this effectively leads to a recording and reproduction system with which the power supply voltage of the acceleration sensor 1 can be determined whether abnormal or not with accuracy and reliability, those of which are flexibly set to be of any required level.

Still further, using a table for a compensation process to be executed by the sensor output compensation means 102 can shorten the time taken therefor. Accordingly, this effectively leads to a recording and reproduction system for performing fall detection in almost real time.

Note here that the recording and reproduction system of the present invention is applicable to those in charge of at least either recording of various kinds of information, or reproducing the recorded information.

## Claims

1. A fall detection method making a fall determination (23) based on an output of an acceleration sensor (1),
**characterized in that**
the method comprises the steps of:
detecting (21) a power supply voltage of the acceleration sensor (1);
comparing (21) the detected power supply voltage with a reference power supply voltage of the acceleration sensor (1); and
compensating (22) an output of the acceleration sensor (1) based on a comparison result; wherein
said fall determination (23) is made based on the compensated output of the acceleration sensor (1).

2. The fall detection method according to claim 1, wherein
only when the power supply voltage shows a change from the reference power supply voltage, the compensation step (22) compensates the output of the acceleration sensor based on the comparison result, and
when the power supply voltage shows a change from the reference power supply voltage, the fall determination (23) is made based on the compensated output, and when no such change is observed, the fall determination (23) is made based on the output before compensation.

3. A fall detection system, comprising:
an acceleration sensor (1) for detecting an acceleration; and
a fall determination means (23) for making a fall determination based on an output of the acceleration sensor (1),
**characterized in that**
the system comprises:
an abnormality detection means (21) for detecting a power supply voltage of the acceleration sensor (1) and comparing the detected power supply voltage with a reference power supply voltage of the acceleration sensor (1); and
a sensor output compensation means (22) for compensating an output of the acceleration sensor (1) based on a comparison result; wherein
said fall determination means (23) is adapted to perform the fall determination based on the compensated output of the acceleration sensor (1).

4. The fall detection system according to claim 3, wherein
said abnormality detection means (21) is adapted to detect a change of the power supply voltage from the reference power supply voltage;
said sensor output compensation means (22) is adapted to compensate the output of the acceleration sensor (1) based on the comparison result only when the change is detected by said abnormality detection means (21); and
said fall determination means (23) is adapted to perform the fall determination based on the compensated output of the acceleration sensor (1) when the change is detected by said abnormality detection means (21), and to perform the fall determination based on the output before compensation, when no change is detected by said abnormality detection means (21).

5. A recording and/or reproduction system, comprising:
recording and/or reproduction means for recording and/or reproducing data on/from a recording medium (60);
acceleration sensor (55) for detecting an acceleration;
fall determination means (103) for making a fall determination based on an output of the acceleration sensor (55); and
control means (54) for executing, when the fall determination is made by said fall determination means (103), a retract operation to the recording and/or reproduction means (54) with respect to the recording medium (60),
**characterized in that**
the system comprises:
an abnormality detection means (101) for detecting a power supply voltage of the acceleration sensor (55) and comparing the detected power supply voltage with a reference power supply voltage of the acceleration sensor (55); and
a sensor output compensation means (102) for compensating an output of the acceleration sensor (55) based on a comparison result; wherein
said fall determination means (103) is adapted to perform the fall determination based on the compensated output of the acceleration sensor (55).

6. The recording and/or reproduction system according to claim 5, wherein
said abnormality detection means (101) is adapted to detect a change of the power supply voltage from the reference power supply voltage;
said sensor output compensation means (102) is adapted to compensate the output of the acceleration sensor (55) based on the comparison result only when the change is detected by said abnormality detection means (101); and
said fall determination means (103) is adapted to perform the fall determination based on the compensated output of the acceleration sensor (55) when the change is detected by said abnormality detection means (101), and to perform the fall determination based on the output before compensation when no change is detected by said abnormality detection means (101).

7. The recording and/or reproduction system according to claim 6, wherein
said abnormality detection means (101) is adapted to perform the detection of the change when an access operation for data recording or reproduction with respect to the recording medium (60) is performed.

8. The recording and/or reproduction system according to claim 5, 6 or 7, wherein
the recording medium (60) is a magnetic recording medium, and
the recording and/or reproduction means is a magnetic head for data recording or reproduction to be performed with respect to the recording medium (60).

9. The recording and/or reproduction system according to anyone of claims 5 to 8, further comprising
power supply means (51) for power supply to the acceleration sensor (55), the control means (54), and the recording and/or reproduction means.

## Patentansprüche

1. Fallerfassungsverfahren, das eine Fallbestimmung (23) basierend auf einem Ausgangssignal eines Beschleunigungssensors (1) durchführt,
**dadurch gekennzeichnet, dass**
das Verfahren folgende Schritte aufweist:
Erfassen (21) einer Stromversorgungsspannung des Beschleunigungssensors (1);
Vergleichen (21) der erfassten Stromversorgungsspannung mit einer Bezugsstromversorgungsspannung des Beschleunigungssensors (1); und
Ausgleichen (22) eines Ausgangssignals des Beschleunigungssensors (1) basierend auf einem Vergleichsresultat; wobei
die Fallbestimmung (23) basierend auf dem ausgeglichenen Ausgangssignal des Beschleunigungssensors (1) durchgeführt wird.

2. Fallerfassungsverfahren nach Anspruch 1, bei dem,
lediglich wenn die Stromversorgungsspannung eine Änderung gegenüber der Bezugsstromversorgungsspannung zeigt, der Ausgleichsschritt (22) das Ausgangssignal des Beschleunigungssensors basierend auf dem Vergleichsresultat ausgleicht, und
wenn die Stromversorgungsspannung eine Änderung gegenüber der Bezugsstromversorgungsspannung zeigt, die Fallbestimmung (23) basierend auf dem ausgeglichenen Ausgangssignal durchgeführt wird, und wenn keine solche Änderung beobachtet wird, die Fallbestimmung (23) basierend auf dem Ausgangssignal vor dem Ausgleich durchgeführt wird.

3. Fallerfassungssystem, mit
einem Beschleunigungssensor (1) zum Erfassen einer Beschleunigung; und
einer Fallbestimmungseinrichtung (23) zum Durchführen einer Fallbestimmung basierend auf einem Ausgangssignal des Beschleunigungssensors (1),
**dadurch gekennzeichnet, dass**
das System folgende Merkmale aufweist:
eine Abnormalitätserfassungseinrichtung (21) zum Erfassen einer Stromversorgungsspannung des Beschleunigungssensors (1) und Vergleichen der erfassten Stromversorgungsspannung mit einer Bezugsstromversorgungsspannung des Beschleunigungssensors (1); und
eine Sensorausgangssignal-Ausgleichseinrichtung (22) zum Ausgleichen eines Ausgangssignals des Beschleunigungssensors (1) basierend auf einem Vergleichsresultat; wobei
die Fallbestimmungseinrichtung (23) angepasst ist, um die Fallbestimmung basierend auf dem ausgeglichenen Ausgangssignal des Beschleunigungssensors (1) durchzuführen.

4. Fallerfassungssystem nach Anspruch 3, bei dem
die Abnormalitätserfassungseinrichtung (21) angepasst ist, um eine Änderung der Stromversorgungsspannung gegenüber der Bezugsstromversorgungsspannung zu erfassen;
die Sensorausgangssignal-Ausgleichseinrichtung (22) angepasst ist, um das Ausgangssignal des Beschleunigungssensors (1) basierend auf dem Vergleichsresultat lediglich auszugleichen, wenn die Änderung durch die Abnormalitätserfassungseinrichtung (21) erfasst wird; und
die Fallbestimmungseinrichtung (23) angepasst ist, um die Fallbestimmung basierend auf dem ausgeglichenen Ausgangssignal des Beschleunigungssensors (1) durchzuführen, wenn die Änderung durch die Abnormalitätserfassungseinrichtung (21) erfasst wird, und um die Fallbestimmung basierend auf dem Ausgangssignal vor dem Ausgleich durchzuführen, wenn keine Änderung durch die Abnormalitätserfassungseinrichtung (21) erfasst wird.

5. Aufzeichnungs- und/oder Wiedergabesystem, mit
einer Aufzeichnungs- und/oder Wiedergabeeinrichtung zum Aufzeichnen und/oder Wiedergeben von Daten auf/von einem Aufzeichnungsmedium (60);
einem Beschleunigungssensor (55) zum Erfassen einer Beschleunigung;
einer Fallbestimmungseinrichtung (103) zum Durchführen einer Fallbestimmung basierend auf einem Ausgangssignal des Beschleunigungssensors (55); und
einer Steuereinrichtung (54) zum Ausführen, wenn die Fallbestimmung durch die Fallbestimmungseinrichtung (103) durchgeführt wird, einer Einziehoperation der Aufzeichnungs- und/oder Wiedergabeeinrichtung (54) hinsichtlich des Aufzeichnungsmediums (60),
**dadurch gekennzeichnet, dass**
das System folgende Merkmale aufweist:
eine Abnormalitätserfassungseinrichtung (101) zum Erfassen einer Stromversorgungsspannung des Beschleunigungssensors (55) und Vergleichen der erfassten Stromversorgungsspannung mit einer Bezugsstromversorgungsspannung des Beschleunigungssensors (55); und
eine Sensorausgangssignal-Ausgleichseinrichtung (102) zum Ausgleichen eines Ausgangssignals des Beschleunigungssensors (55) basierend auf einem Vergleichsresultat; wobei
die Fallbestimmungseinrichtung (103) angepasst ist,um die Fallbestimmung basierend auf dem ausgeglichenen Ausgangssignal des Beschleunigungssensors (55) durchzuführen.

6. Aufzeichnungs- und/oder Wiedergabesystem nach Anspruch 5, bei dem
die Abnormalitätserfassungseinrichtung (101) angepasst ist, um eine Änderung der Stromversorgungsspannung gegenüber der Bezugsstromversorgungsspannung zu erfassen;
die Sensorausgangssignal-Ausgleichseinrichtung (102) angepasst ist, um das Ausgangssignal des Beschleunigungssensors (55) basierend auf dem Vergleichsresultat lediglich auszugleichen, wenn die Änderung durch die Abnormalitätserfassungseinrichtung (101) erfasst wird; und
die Fallbestimmungseinrichtung (103) angepasst ist, um die Fallbestimmung basierend auf dem ausgeglichenen Ausgangssignal des Beschleunigungssensors (55) durchzuführen, wenn die Änderung durch die Abnormalitätserfassungseinrichtung (101) erfasst wird, und um die Fallbestimmung basierend auf dem Ausgangssignal vor dem Ausgleich durchzuführen, wenn keine Änderung durch die Abnonnalitätserfassungseinrichtung (101) erfasst wird.

7. Aufzeichnungs- und/oder Wiedergabesystem nach Anspruch 6, bei dem
die Abnormalitätserfassungseinrichtung (101) angepasst ist, um die Erfassung der Änderung durchzuführen, wenn eine Zugriffsoperation für eine Datenaufzeichnung oder -wiedergabe hinsichtlich des Aufzeichnungsmediums (60) durchgeführt wird.

8. Aufzeichnungs- und/oder Wiedergabesystem nach Anspruch 5, 6 oder 7, bei dem
das Aufzeichnungsmedium (60) ein magnetisches Aufzeichnungsmedium ist, und
die Aufzeichnungs- und/oder Wiedergabeeinrichtung ein magnetischer Kopf für eine Datenaufzeichnung oder -wiedergabe, die hinsichtlich des Aufzeichnungsmediums (60) durchzuführen ist, ist.

9. Aufzeichnungs- und/oder Wiedergabesystem nach einem der Ansprüche 5 bis 8, ferner mit
einer Stromversorgungseinrichtung (51) für eine Stromversorgung zu dem Beschleunigungssensor (55), der Steuereinrichtung (54) und der Aufzeichnungs-und/oder Wiedergabeeinrichtung.

## Revendications

1. Procédé de détection de chute réalisant une détermination de chute (23) sur la base d'une sortie d'un capteur d'accélération (1),
**caractérisé en ce que**
le procédé comprend les étapes consistant à:
détecter (21) une tension d'alimentation électrique du capteur d'accélération (1),
comparer (21) la tension d'alimentation électrique détectée à une tension d'alimentation électrique de référence du capteur d'accélération (1), et
compenser (22) une sortie du capteur d'accélération (1) sur la base d'un résultat de comparaison, où
ladite détermination de chute (23) est effectuée sur la base de la sortie compensée du capteur d'accélération (1).

2. Procédé de détection de chute selon la revendication 1, dans lequel
c'est seulement lorsque la tension d'alimentation électrique présente une variation par rapport à la tension d'alimentation électrique de référence que l'étape de compensation (22) compense la sortie du capteur d'accélération sur la base du résultat de comparaison, et
lorsque la tension d'alimentation électrique présente une variation par rapport à la tension d'alimentation électrique de référence, la détermination de chute (23) est effectuée sur la base de la sortie compensée, et lorsque aucune telle variation n'est observée, la détermination de chute (23) est effectuée sur la base de la sortie avant compensation.

3. Système de détection de chute, comprenant :
un capteur d'accélération (1) destiné à détecter une accélération, et
un moyen de détermination de chute (23) destiné à effectuer une détermination de chute sur la base d'une sortie du capteur d'accélération (1),
**caractérisé en ce que**
le système comprend :
un moyen de détection d'anomalie (21) destiné à détecter une tension d'alimentation électrique du capteur d'accélération (1) et à comparer la tension d'alimentation électrique détectée à une tension d'alimentation électrique de référence du capteur d'accélération (1), et
un moyen de compensation de sortie de capteur (22) destiné à compenser une sortie du capteur d'accélération (1) sur la base d'un résultat de comparaison, où
ledit moyen de détermination de chute (23) est conçu pour exécuter la détermination de chute sur la base de la sortie compensée du capteur d'accélération (1).

4. Système de détection de chute selon la revendication 3, dans lequel
ledit moyen de détection d'anomalie (21) est conçu pour détecter une variation de la tension d'alimentation électrique par rapport à la tension d'alimentation électrique de référence,
ledit moyen de compensation de sortie de capteur (22) est conçu pour compenser la sortie du capteur d'accélération (1) sur la base du résultat de comparaison seulement lorsque la variation est détectée par ledit moyen de détection d'anomalie (21), et
ledit moyen de détermination de chute (23) est conçu pour exécuter la détermination de chute sur la base de la sortie compensée du capteur d'accélération (1) lorsque la variation est détectée par ledit moyen de détection d'anomalie (21), et pour exécuter la détermination de chute sur la base de la sortie avant compensation, lorsque aucune variation n'est détectée par ledit moyen de détection d'anomalie (21).

5. Système d'enregistrement et/ou de reproduction, comprenant :
un moyen d'enregistrement et/ou de reproduction destiné à enregistrer et/ou reproduire des données sur/depuis un support d'enregistrement (60),
un capteur d'accélération (55) destiné à détecter une accélération,
un moyen de détermination de chute (103) destiné à effectuer une détermination de chute sur la base d'une sortie du capteur d'accélération (55), et
un moyen de commande (54) destiné à exécuter, lorsque la détermination de chute est effectuée par ledit moyen de détermination de chute (103) une opération de retrait sur le moyen d'enregistrement et/ou de reproduction (54) en ce qui concerne le support d'enregistrement (60),
**caractérisé en ce que**
le système comprend :
un moyen de détection d'anomalie (101) destiné à détecter une tension d'alimentation électrique du capteur d'accélération (55) et à comparer la tension d'alimentation électrique détectée à une tension d'alimentation électrique de référence du capteur d'accélération (55), et
un moyen de compensation de sortie de capteur (102) destiné à compenser une sortie du capteur d'accélération (55) sur la base du résultat de comparaison, où
ledit moyen de détermination de chute (103) est conçu pour exécuter la détermination de chute sur la base de la sortie compensée du capteur d'accélération (55).

6. Système d'enregistrement et/ou de reproduction selon la revendication 5, dans lequel
ledit moyen de détection d'anomalie (101) est conçu pour détecter une variation de la tension d'alimentation électrique par rapport à la tension d'alimentation électrique de référence,
ledit moyen de compensation de sortie de capteur (102) est conçu pour compenser la sortie du capteur d'accélération (55) sur la base du résultat de comparaison seulement lorsque la variation est détectée par ledit moyen de détection d'anomalie (101), et
ledit moyen de détermination de chute (103) est conçu pour exécuter la détermination de chute sur la base de la sortie compensée du capteur d'accélération (55) lorsque la variation est détectée par ledit moyen de détection d'anomalie (101) et pour exécuter la détermination de chute sur la base de la sortie avant compensation lorsque aucune variation n'est détectée par ledit moyen de détection d'anomalie (101).

7. Système d'enregistrement et/ou de reproduction selon la revendication 6, dans lequel
ledit moyen de détection d'anomalie (101) est conçu pour exécuter la détection de la variation lorsqu'une opération d'accès pour un enregistrement ou une reproduction de données en ce qui concerne le support d'enregistrement (60) est exécutée.

8. Système d'enregistrement et/ou de reproduction selon la revendication 5, 6 ou 7, dans lequel
le support d'enregistrement (60) est un support d'enregistrement magnétique, et
le moyen d'enregistrement et/ou de reproduction est une tête magnétique destinée à l'enregistrement ou à la reproduction de données devant être exécuté en ce qui concerne le support d'enregistrement (60).

9. Système d'enregistrement et/ou de reproduction selon l'une quelconque des revendications 5 à 8, comprenant en outre
un moyen d'alimentation électrique (51) destiné à alimenter électriquement le capteur d'accélération (55), le moyen de commande (54) et le moyen d'enregistrement et/ou de reproduction.
